(19) **Europäisches Patentamt / European Patent Office / Office européen des brevets**

(11) **EP 1 102 995 B2**

(12) **NOUVEAU FASCICULE DE BREVET EUROPEEN**

Après la procédure d'opposition

(45) Date de publication et mention de la décision concernant l'opposition:
**17.06.2009 Bulletin 2009/25**

(45) Mention de la délivrance du brevet:
**14.07.2004 Bulletin 2004/29**

(21) Numéro de dépôt: **00938874.5**

(22) Date de dépôt: **31.05.2000**

(51) Int Cl.:
**G01P 3/44** *(2006.01)*    **G01P 3/487** *(2006.01)*

(86) Numéro de dépôt international:
**PCT/FR2000/001511**

(87) Numéro de publication internationale:
**WO 2000/075673 (14.12.2000 Gazette 2000/50)**

(54) **ROULEMENT EQUIPE D'UN DISPOSITIF CAPTEUR D'INFORMATIONS**

WÄLZLAGER MIT VORRICHTUNG ZUR MESSDATENERFASSUNG

BEARING PROVIDED WITH AN INFORMATION SENSOR

(84) Etats contractants désignés:
**DE FR GB IT**

(30) Priorité: **04.06.1999 FR 9907102**

(43) Date de publication de la demande:
**30.05.2001 Bulletin 2001/22**

(73) Titulaire: **SNR ROULEMENTS**
**F-74010 Annecy Cedex (FR)**

(72) Inventeurs:
• **PEILLOUD, Fernand**
**F-74540 Alby-sur-Chéran (FR)**
• **BOCHET, Alain**
**F-76600 Seynod (FR)**

• **DESBIOLLES, Pascal**
**F-74570 Thorens-Glières (FR)**

(74) Mandataire: **Geismar, Thierry**
**NOVAGRAAF IP**
**3, avenue de l'Opéra**
**75001 Paris (FR)**

(56) Documents cités:

| | |
|---|---|
| **EP-A- 0 443 940** | **EP-A- 0 652 438** |
| **EP-A- 0 869 365** | **WO-A- 00/62079** |
| **US-A- 4 418 372** | **US-A- 4 914 387** |
| **US-A- 4 920 341** | **US-A- 5 026 178** |
| **US-A- 5 523 681** | |

**EP 1 102 995 B2**

**Description**

L'invention se rapporte au domaine technique des roulements pourvus d'un moyen tournant générateur d'impulsions, appelé « codeur », un dispositif de détection, appelé « capteur », permettant l'obtention d'une information, telle que par exemple, la vitesse de rotation, la position angulaire et le sens de rotation d'un palier comprenant un tel roulement à codeur incorporé.

De tels paliers peuvent, par exemple, être employés pour les roues de véhicules automobiles pourvus de système anti-blocage des roues.

L'invention se rapporte plus particulièrement, mais non exclusivement, aux roulements à codeur magnétique incorporé, le capteur fonctionnellement associé étant de type magnétorésistance ou sonde à effet Hall.

Par « sonde à effet Hall », on désigne ici des capteurs comprenant au moins un élément sensible, généralement un semi-conducteur sous forme de plaquette, tel que, lorsqu'il est parcouru par un courant I, en étant par ailleurs soumis à une induction B faisant avec le courant un angle $\theta$, il apparaît dans une direction perpendiculaire au courant I et à l'induction B une tension V valant $V=K.I.B. \sin\theta$, K étant appelé « constante de Hall », et étant caractéristique du matériau et de la géométrie de l'élément sensible. K variant avec la température.

Par « magnétorésistance », on désigne ici une varistance sensible à l'intensité d'un champ magnétique, en d'autres termes une résistance en matériau semi-conducteur dont la valeur ohmique varie lorsque varie l'intensité d'un champ magnétique.

Les sondes de Hall sont considérées comme des capteurs actifs. dans la mesure où l'information délivrée est liée à une force électromotrice.

Lorsque ces sondes de Hall sont utilisées pour la traduction de position ou de déplacement, l'aimant qui crée l'induction est le corps d'épreuve sur lequel agit la valeur primaire à mesurer, modifiant le mesurande secondaire, à savoir conventionnellement la composante normale de l'induction, mesurande auquel est directement sensible la sonde.

On connaît déjà, dans l'art antérieur, de nombreuses conceptions de roulements à codeur magnétique incorporé et capteur de type sonde à effet Hall ou magnétorésistance.

On peut se référer, par exemple, aux documents suivants :

- demandes de brevet en France n° 2 667 947, 2 669 432, 2 669 728, 2 671 633, 2 678 691, 2 678 692, 2 690 989, 2 693 272, 2 694 082, 2 702 567, 2 710 985, 2 718 499 ;
- demandes de brevet européen n° 375 019, 420 040, 420 041, 438 624, 487 405, 488 853, 498 298, 518 157, 521 789, 522 933, 531 924, 557 931, 557 932, 647 851, 693 689, 701 132, 701 133, 714 029, 745 857, 751 311, 753 679, 767 385.

On peut se référer, également à titre d'exemple, aux documents suivants : issus de la demanderesse :

- demandes de brevet en France n° 2 639 689, 2 640 706, 2 645 924, 2 730 283, 2 732 458, 2 717 266, 2 701 298 ;
- demandes de brevet européen n° 371 836, 376 771,484 195, 394 083, 607 719, 616 219, 619 438, 631 140, 652 438, 671 628, 725 281, 735 348.

Le document EP 0443940 décrit un roulement permettant de détecter le sens et la vitesse de rotation d'un arbre de direction. Ce roulement présente une bague intérieure tournante et allongée de manière à recevoir un élément codeur dont le champ magnétique est détecté par des capteurs à effet HALL placés sur un support démontable.

Le document EP 0 652 438 décrit un joint d'étanchéité monté sur la bague fixe d'un roulement et muni de capteurs d'informations à effet HALL. Le roulement est, par ailleurs, composé d'une bague tournante portant un élément codeur pouvant défiler devant les capteurs.

Le document EP 0 869 365 décrit un roulement muni d'un capteur de vitesse de rotation. Un codeur annulaire fixé à la bague intérieure tournante crée un champ magnétique détecté par des capteurs à effet HALL placés dans un support démontable.

Lorsque l'on souhaite connaître tant la vitesse de rotation de la bague intérieure ou de la bague extérieure du roulement que le sens de rotation de cette bague, il est connu de disposer de deux signaux déphasés de 90° électrique, afin de définir le sens de rotation.

A fin de clarté, il est rappelé ici que deux signaux sinusoïdaux de même fréquence sont dits en quadrature lorsque ces signaux sont déphasés de $\pi/2$ ou 90° ou encore un quart de cycle, c'est-à-dire que l'un des signaux est à sa valeur de crête lorsque l'autre passe par zéro.

Ainsi, par exemple, le document FR-A-2 599 794, issu de la demanderesse, décrit un palier ou roulement à capteur d'informations comportant un élément fixe supportant. dans un mode de réalisation, deux capteurs de Hall ou magnérorésistances écartés angulairement par un intervalle de n+0,5n, dans lequel n est la longueur d'un aimant.

Le document EP-A-395 783 décrit un palier à capteur pour mesurer la vitesse de rotation et/ou l'angle de rotation, comprenant un ou plusieurs capteurs à effet Hall.

Dans les dispositifs du type mentionné ci-dessus, les signaux déphasés sont issus de deux éléments sensibles à effet Hall ou magnétorésistances, placés sur un substrat ou implantés directement sur silicium à une distance définie et fixe entre eux, cette distance étant fonction du codeur.

Compte tenu de la distance inter-élémenttixée par le principe même du capteur, dans le cas où la distance polaire n'est pas adaptée, les signaux digitaux issus des éléments sensibles ne sont pas en quadrature.

De sorte que les dispositifs connus de l'art antérieur présentent les inconvénients suivants :

- la plage de longueur polaire, donc de codeur utilisable avec un capteur dual (c'est-à-dire à deux éléments sensibles), dont la longueur polaire est fixe, est limitée par la tolérance sur la quadrature des signaux digitaux de sortie ;
- pour une longueur polaire correspondant à la distance inter-éléments, la tolérance sur les signaux de sortie est fonction de la technologie du capteur et de la précision de placement des éléments sensibles ;
- dans le cas d'un capteur dual délivrant des signaux analogiques associés à un principe d'interpolation tel que décrit dans le document WO-97/01660 ou dans le document FR-97/12033, la précision requise concernant la quadrature des signaux analogiques limite l'utilisation d'un tel capteur à des codeurs magnétiques dont la distance polaire correspond de manière précise à la distance Inter-éléments.

Ces inconvénients impliquent qu'un montage spécifique de la position des capteurs soit réalisé pour chaque dimension de roulement.

L'invention se rapporte à un dispositif de détection du sens de rotation d'une bague mobile d'un roulement, ce dispositif permettant également la détection de la position angulaire et de la vitesse de rotation de ladite bague, ledit dispositif étant commun à plusieurs dimensions de roulement.

A cet effet, l'invention a pour objet une série de roulements selon la revendication 1.

Les éléments sensibles sont intégrés dans une sonde qui intègre également l'électronique de traitement des signaux détectés par les éléments sensibles. La sonde peut alors former un circuit intégré, par exemple de type ASIC.

Dans un mode de réalisation, le substrat est réalisé sous la forme d'une carte à circuit imprimé de type PCB.

Dans un autre mode de réalisation, le substrat est réalisé sous la forme d'un film polymère souple.

La connectique d'entrée/sortie du dispositif de détection est associée au substrat. Le dispositif de détection comprend alors la sonde, le substrat et la connectique d'entrée/sortte.

Les moyens de positionnement du substrat comprennent une pièce annulaire coaxiale au roulement dans laquelle une rainure prismatique radiale apte à recevoir le substrat est formée. La pièce annulaire comprenant un logement, situé par exemple dans une extension radiale de la pièce annulaire par rapport à la bague fixe du roulement, prévu pour recevoir la connectique d'entrée/sortie du dispositif de détection.

Dans une variante, la pièce annulaire est réalisée avec une extension radiale sous forme de bride pour permettre la fixation du roulement à un bâti ou à un carter.

La pièce annulaire est par exemple associée à la bague fixe par l'intermédiaire d'un deuxième manchon coaxial au roulement qui est monté à force sur la bague fixe.

En variante, le manchon comporte une extension axiale ajustée sur le diamètre extérieur de la bague fixe et est réalisé avec une extension radiale sous forme de bride pour permettre la fixation du roulement à un bâti ou à un carter.

Un opercule peut alors être monté à étanchéité dans une portée concentrique du logement et sur la face extérieure du manchon pour protéger le substrat des éventuelles agressions.

Dans une réalisation, la connectique d'entrée/sortie du dispositif de détection comprend un connecteur, par exemple embrochable.

Dans une autre réalisation, la connectique d'entrée/sortie du dispositif de détection comprend un câble multifilaire.

Le moyen générateur d'impulsions est une pièce annulaire en matériau synthétique chargé de particules de ferrite formée d'une pluralité de domaines contigus à direction d'aimantation inversée d'un domaine donné par rapport aux deux domaines qui lui sont contigus.

Le moyen générateur d'impulsions est porté à liaison fixe par un manchon coaxial au roulement qui est monté à force sur la bague mobile. Un dispositif d'étanchéité pouvant être réalisé au moyen d'un joint dynamique dont le talon est associé à la face externe de la pièce annulaire et dont la lèvre frottante vient porter élastiquement surune extrémité externe dudit manchon tournant.

Le joint d'étanchéité est de diamètre inférieur à celui du roulement, par exemple, le joint d'étanchéité est choisi, pour un même diamètre d'alésage du roulement, dans une série de roulements normalisés à diamètres extérieurs plus faibles.

Les éléments sensibles alignés sont choisis parmi le groupe comprenant les sondes à effet Hall, les magnétorésistances, les magnétorésistances géantes.

Le dispositif de détection comprend un nombre pair 2N d'éléments sensibles divisé en au moins deux sous-ensembles, par exemple, il comprend un nombre multiple de quatre 4P éléments sensibles divisé en quatre sous-ensembles.

La sélection du nombre d'éléments sensibles choisi pour la création des sous-ensembles d'éléments sensibles est effectuée, par l'intermédiaire de la connectique d'entrée/sortie, par programmation de type EEPROM, Zener Zapping ou équivalent.

La sonde intègre des moyens additionneurs et des moyens inverseurs de sorte à former, à partir des signaux détectés par chacun des éléments sensibles, au moins deux signaux analogiques de sortie du dispositif de détection en quadrature de phase.

Les signaux de sortie du dispositif de détection sont obtenus par soustraction de sorte à éliminer la composante continue du champ magnétique délivré par le moyen annulaire.

Les signaux analogiques sont amplifiés pour obtenir des signaux de sortie du dispositif de détection d'amplitude identique. La sonde intègre également un dispositif interpolateur des signaux analogiques détectés par les éléments sensibles, de sorte à délivrer des signaux digitaux de résolution supérieure à celle du codeur. L'interpolation et/ou l'amplification des signaux de sortie du dispositif de détection est réalisée dans la sonde par l'intermédiaire de la connectique d'entrée/sortie.

L'adaptation du dispositif de détection à différentes longueurs polaires du codeur est ainsi effectuée après le montage du dispositif de détection sur le roulement.

D'autres objets et avantages de l'invention apparaîtront au cours de la description suivante de modes de réalisation, description qui va être effectuée en référence aux dessins annexés dans lesquels :

- la figure 1 représente de façon schématique la sonde ainsi que le champ magnétique détecté par le capteur en entrée et les signaux analogiques délivrés en sortie du dispositif de détection ;

- la figure 2 représente une vue partielle et en coupe longitudinale un premier mode de réalisation de roulement à capteur d'informations muni d'une extension radiale comprenant un connecteur embrochable ;

- la figure 3 représente une vue arrière partielle selon la coupe AA du premier mode de réalisation représenté sur la figure 2 ;

- La figure 4 représente une vue partielle et en coupe longitudinale un deuxième mode de réalisation de roulement à capteur d'informations muni d'une entrée/sortie axiale par câble multifilaire ;

- la figure 5 représente une vue partielle et en coupe longitudinale une première variante du premier ou du deuxième mode de réalisation de roulement à capteur d'informations, dans laquelle le manchon solidaire de la bague fixe est réalisé avec une extension radiale sous forme d'une bride de fixation ;

- la figure 6 représente une vue partielle et en coupe longitudinale une deuxième variante du premier ou du deuxième mode de réalisation de roulement à capteur d'informations, dans laquelle le manchon solidaire de la bague fixe est réalisé sous forme d'une bride de fixation comportant un fourreau ;

- la figure 7 représente une vue partielle et en coupe une troisième variante du premier ou du deuxième mode de réalisation de roulement à capteur d'informations, dans laquelle la pièce annulaire portant le substrat est réalisée avec une extension radiale sous forme d'une bride de fixation ;

- la figure 8 représente une vue arrière partielle selon la coupe AA de la troisième variante du premier ou du deuxième mode de réalisation de roulement à capteur d'informations représenté sur la figure 7 ;

- la figure 9 représente une vue partielle et en coupe longitudinale un troisième mode de réalisation de roulement à capteur d'informations dans lequel le substrat se présente sous la forme d'un film isolant souple ;

- la figure 10 représente une vue arrière partielle du troisième mode de réalisation du roulement à capteur d'informations représenté sur la figure 11 ;

- la figure 11 représente une vue partielle et en coupe longitudinale une variante du troisième mode de réalisation de roulement à capteur d'informations dans laquelle la pièce annulaire portant le substrat est réalisée avec une extension radiale sous forme d'une bride de fixation ;

- la figure 12 représente une vue arrière partielle et partiellement selon la coupe AA de la variante du troisième mode de réalisation de roulement à capteur d'informations représenté sur la figure 11.

Un roulement 1 comprend typiquement une bague mobile 2 et une bague fixe 3 séparées par des corps roulants 4 qui sont maintenus à équidistance lors de la rotation.

Le roulement 1 est équipé d'un dispositif capteur d'informations 5, telles que la position angulaire, la vitesse et le sens de rotation de la bague mobile.

Le dispositif capteur d'informations 5 comprend un moyen générateur d'impulsions magnétiques 6 appelé codeur associé à la bague mobile 2, et un dispositif de détection 7 de ces impulsions appelé capteur associé à la bague fixe 3.

Le codeur 6 comprend un nombre pair de pôles. Par exemple, le codeur magnétique multipolaire 6 peut être une pièce annulaire, en matériau synthétique chargé de particules de ferrites de Baryum ou de ferrites de Strontium, ou d'un autre matériau ferromagnétique dur, formé d'une pluralité de domaines continus à direction d'aimantation inversée d'un domaine donné par rapport aux domaines donnés qui lui sont contigus.

La longueur polaire Lp du codeur 6 est définie comme la longueur d'un pôle magnétique mesuré au rayon de lecteur considéré.

Dans une telle configuration, on peut considérer que l'induction magnétique délivrée par le codeur 6 est sinusoïdale à l'entrefer considéré.

Le dispositif de détection 7 comprend une sonde 9 reportée, par exemple par soudage, sur un substrat 8 assurant le maintient en position de la sonde 9 en regard du codeur 6, et la connectique d'entrée/sortie 11.

La sonde 9 est réalisée sous la forme d'un circuit électronique monolithique qui intègre sur silicium d'une part un nombre pair 2N (N>1) d'éléments sensibles 40 de type magnétorésistance ou sonde à effet Hall et d'autre part l'électronique de traitement des signaux détectés par les éléments sensibles 40. La sonde 9 est packagée dans un boîtier CMS, par exemple de type TSSOP20.

Les éléments sensibles 40 sont placés à égale distance d entre eux, ces éléments étant sensiblement disposés le long d'une droite, par exemple les éléments sensibles 40 peuvent être disposés sur un arc de cercle qui peut être approximé à une droite.

Cet agencement définit une barrette 10 d'éléments sensibles 40 de longueur égale à (2N-1)d.

La sonde 9 comprend également l'électronique de traitement des signaux analogiques issus des éléments sensibles 40 afin d'obtenir des signaux en quadrature parfaite, de sorte à obtenir des informations telles que, par exemple, la vitesse, le sens et/ou l'angle de rotation du codeur magnétique multipolaire 6, et, par la même, la vitesse, le sens et/ou l'angle de rotation de la bague 2 du roulement 1 supportant ce codeur 6.

La sonde 9 forme un circuit intégré personnalisé pour application spécifique, circuit parfois désigné sous le terme ASIC (Application Specific Interiorated Circuit), pour faire référence au circuit intégré conçu partiellement ou complètement en fonction des besoins.

Le substrat 8 comprend des moyens de raccordement électrique permettant d'associer une connectique d'entrée/sortie 11 du dispositif de détection 7 au substrat 8. Par l'intermédiaire de la connectique d'entrée/sortie 11 on peut, notamment, recueillir les informations délivrées par la sonde 9 et réaliser la programmation de ladite sonde 9.

Le substrat 8, par exemple sous la forme d'une carte à circuit imprimé type PCB, permet de raccorder électriquement les pattes de sortie de la sonde 9 avec la connectique d'entrée/sortie 11. Le substrat 8 est par exemple formé à partir d'un matériau rigide de type FR4 ou sous la forme d'un film polymère souple de type Kapton.

Dans l'optique de l'utilisation du dispositif de détection 7 avec différentes dimensions de roulement, les signaux délivrés doivent être en quadrature parfaite sur une large gamme de longueur polaire du codeur 6.

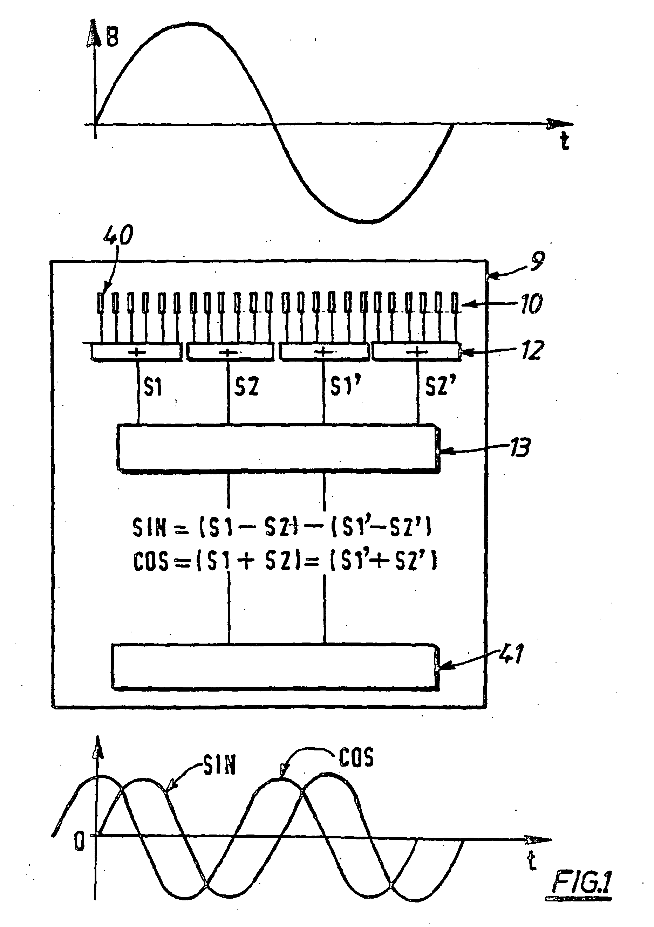

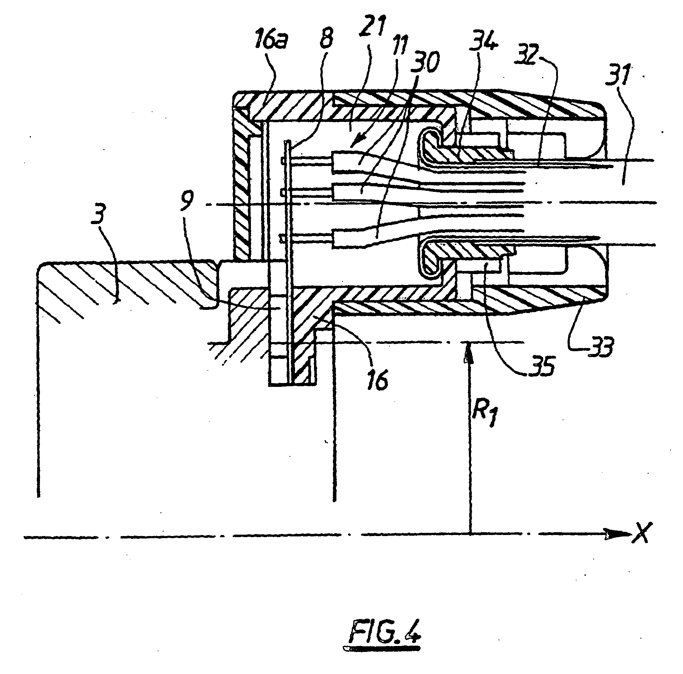

Dans un mode de réalisation de la sonde 9 représenté sur la figure 1, 4P éléments sensibles 40 sont intégrés dans la sonde 9 en quatre quadrants de P éléments sensibles 40 (P=6).

Quatre moyens additionneurs 12 ou circuits d'addition, tels qu'un amplificateur, sont également intégrés dans la sonde 9. Les éléments sensibles 40 de chacun des quadrants sont connectés respectivement à l'un des moyens additionneurs 12, de sorte à assurer la sommation des signaux issus des éléments sensibles 9.

On obtient ainsi quatre signaux sommes :

$$- S_1 = Se_1 + ... + Se_P \; ;$$

$$- S_2 = Se_{P+1} + ... + Se_{2P} \; ;$$

$$- S'_1 = Se_{2P+1} + ... + Se_{3P} \; ;$$

$$- S'_2 = Se_{3P+1} + ... + Se_{4P}$$

Un circuit électronique 13, par exemple à base d'amplificateurs additionneurs et d'inverseurs, est intégré dans la sonde 9 pour former les combinaisons de signaux suivantes :

$$SIN = (S_1 - S_2) - (S'_1 - S'_2)$$

$$COS = (S_1 + S_2) - (S'_1 + S'_2)$$

Dans le mode de réalisation représenté sur la figure 1, la sonde 9 intègre également un dispositif d'interpolation 41. Les signaux SIN et COS délivrés sont reliés électriquement au dispositif d'interpolation 41 de sorte à transformer les signaux analogique SIN et COS en signaux digitaux de sortie.

La quadrature des signaux SIN et COS est toujours égale à 90°, quelque soit la longueur polaire Lp vue par le capteur 7.

D'autre part, l'offset magnétique étant supposé uniforme sur l'ensemble des éléments sensibles 40, les signaux SIN et COS en sont exempts car ils sont obtenus par soustraction.

Dans l'optique de l'utilisation d'un dispositif d'interpolation 41 augmentant la résolution des signaux de sortie du dispositif de détection 7, les signaux analogiques SIN et COS doivent en outre être de même amplitude avant de pouvoir être interpolés.

Dans le cas où la longueur polaire Lp est égaie à une longueur de référence Lpo définie par 2Pd, les signaux SIN et COS sont de même amplitude. Mais ceci n'est pas le cas lorsque la longueur polaire Lp est différente de la longueur de référence Lpo.

Dans une première variante de réalisation, et lorsque Lpo est supérieure à Lp, un moyen d'augmenter le nombre de longueurs polaires utilisables est de réduire la longueur de la barrette 10 à 2M éléments utilisés sur les 2N (M étant inférieur à N), par programmation, par exemple de type EEPROM ou ZENER ZAPPING.

Par EEPROM, on désigne ici une mémoire reprogrammable effaçable électriquement, dont chacune des cellules est par exemple formée d'un transistor MNOS ou DIFMOS ou équivalent, avec des transistors de lecture et d'écriture, les transistors MNOS (Metal Nitride Oxide Semiconductor), dérivés des transistors MOS, formant une mémoire à semi-conducteur.

Par Zener Zapping, on désigne conventionnellement l'ajustement Zener, c'est-à-dire une correction de l'erreur éventuelle de tension fournie par un dénumériseur pour un mot binaire d'entrée déterminé, par mise en court-circuit sélective de diodes Zener polarisées dans le sens inverse et alimentées par des sources de courant constant d'intensité croissante, l'intensité totale du circuit ainsi obtenu créant la tension de correction nécessaire aux bornes d'une résistance.

Dans une seconde variante de réalisation, on peut amplifier de façon électronique l'un des deux signaux SIN ou COS par rapport à l'autre pour retrouver une amplitude identique pour ces deux signaux.

Dans un mode de réalisation de l'égalisation des amplitudes, le nombre d'éléments sensibles 40 utilisés est d'abord ajusté par programmation, puis les amplitudes sont égalisées électroniquement par un moyen amplificateur du signal SIN et/ou COS.

Dans ce mode de réalisation, l'égalisation des amplitudes, et donc l'adaptation du capteur 7 à différentes longueurs polaires, est effectuée par l'intermédiaire de la connectique d'entrée/sortie 11 après le montage du dispositif de détection 7 sur le roulement 1.

Après cette programmation du dispositif de détection 7 en fonction de la longueur polaire, les signaux analogiques SIN et COS sont interpolés au moyen du dispositif d'interpolation 41 pour fournir des signaux digitaux à partir desquels on peut obtenir des informations telles que, par exemple, la vitesse, le sens et/ou l'angle de rotation du codeur magnétique multipolaire 6, et, par la même, la vitesse, le sens et/ou l'angle de rotation de la bague 2 du roulement 1 supportant ce codeur 6

Dans un deuxième mode de réalisation la sonde 9 (non représenté), l'ensemble de 2N éléments sensibles 40 est divisé en deux sous-ensembles de N éléments sensibles 40.

De même que dans la réalisation précédente, des moyens additionneurs et inverseurs sont prévus de sorte à fournir à la sortie du dispositif de détection 7 les deux signaux $S_1 + S_2$ et $S_1 - S_2$

Ces deux signaux sont en quadrature de phase parfaite.

De même que dans la réalisation précédente, l'égalisation des amplitudes peut être réalisée soit par programmation, soit par amplification électronique de l'un ou l'autre de ces signaux.

Le dispositif de détection 7 décrit dans ces deux modes de réalisation est donc utilisable pour plusieurs dimensions de roulement car il s'adapte, par programmation et/ou égalisation d'amplitudes, à une grande plage de longueur polaire. Le dispositif de détection 7, c'est à dire au moins la sonde 9, le substrat 8 et la connectique d'entrée/sortie 11, peut alors être commun à plusieurs dimensions de roulement 1.

A titre d'exemple, un dispositif de détection 7 comprenant :

une barrette 10 de 3.45 mm en 24 éléments sensibles 40 ajustable par programmation à 3 niveaux de longueur différents,
et,
un étage d'égalisation d'amplitudes à 13 pas de réglage fonctionnantface à un codeur 6 à 32 périodes par tour sur une étendue du signal magnétique de plus d'une période à moins d'une demi-période, permet un choix de 78 rayons de lecteur R1 compris entre 9.750 mm et 48.954 mm.

Le rayon de lecteur R1 étant défini comme la distance sur l'axe de mesure comprise entre l'axe de rotation du roulement 1 et la barrette 10 d'éléments sensibles 40.

Si, dans les mêmes conditions, le même dispositif de détection 7 est utilisé devant un codeur à 64 périodes, 78 rayons de lecteur R1 compris entre 19.51 mm et 87.96 mm sont envisageables.

Plus généralement, une même sonde 9 est capable de travailler sur des longueurs polaires de codeur 6 $Lp_{max}$ supérieures de 25% à la longueur de la barrette 10 pour laquelle tous les éléments sensibles 40 sont actifs jusqu'à des longueurs polaires $Lp_{min}$ égales à environ 25% de la longueur de la barrette 10, dans ce cas le signal magnétique traité correspond à un peu plus d'une période du signal magnétique soit un peu plus de deux longueurs polaires. Le rapport $Lp_{max} / Lp_{min}$ est donc de l'ordre de 5 d'où une adaptation de la sonde 9 à une gamme de rayons de lecteur dans le même rapport $R1_{max} / R1_{min} = 5$.

Cette capacité d'adaptation permet d'utiliser une même sonde 9 pour un grand nombre de roulements d'une même série de roulements. Une seule configuration de dispositif de détection 7 peut donc être retenue, le substrat 8 étant associé à la bague fixe 3 de l'un ou l'autre des roulements d'une série normalisée de roulements dans une situation approximativement identique par rapport au diamètre extérieur dudit roulement.

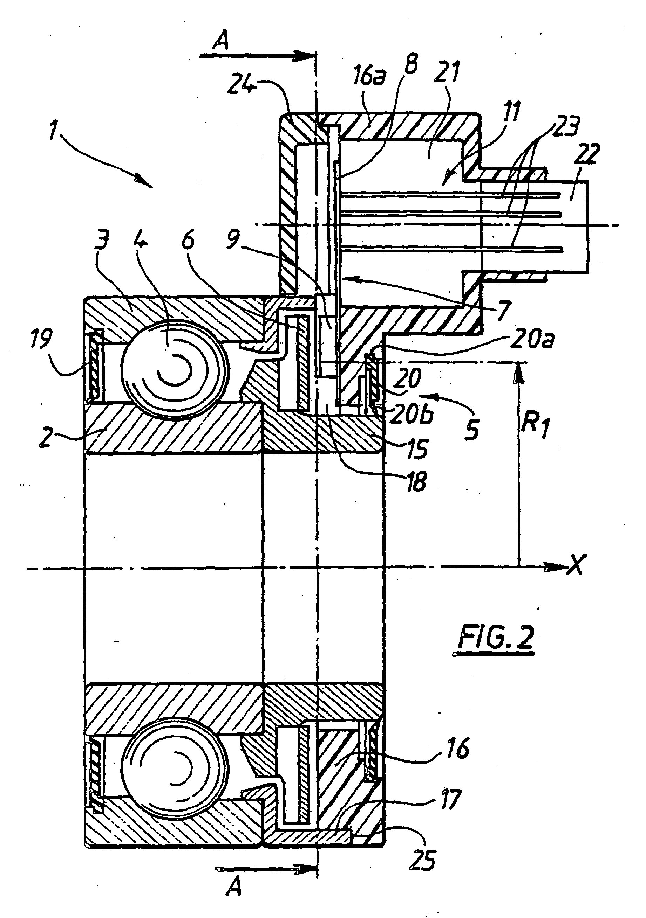

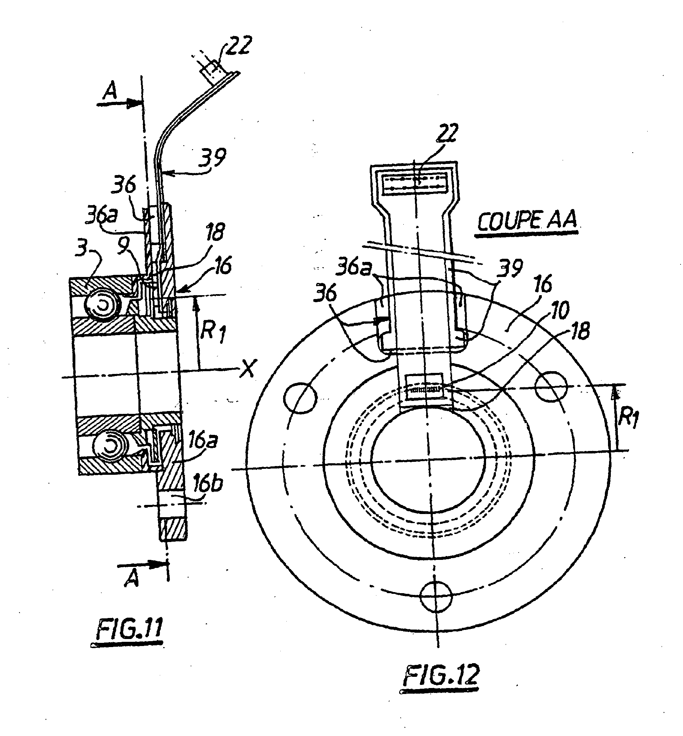

Les figures 2 à 12 représentent différents modes de réalisation d'un roulement équipé d'un dispositif capteur d'informations suivant l'invention.

Sur ces figures est représenté un axe X longitudinal confondu avec l'axe de rotation du roulement.

Les termes axial, longitudinal, avant et arrière sont définis par rapport à cet axe.

Une direction radiale ou transversale est définie dans un plan perpendiculaire à l'axe X.

Une localisation interne est située à proximité de l'axe X, tandis qu'une localisation externe est située à distance de l'axe X.

Dans les modes de réalisation représentés, la bague mobile 2 est la bague intérieure du roulement 1 et la bague extérieure 3 est fixe.

De manière conventionnelle, la bague intérieure 2 possède un alésage et deux faces latérales respectivement avant et arrière.

La bague extérieure 3 possède une face externe et deux faces latérales, respectivement avant et arrière.

Dans les réalisations représentées, le dispositif capteur d'informations 5 comprend trois éléments qui sont indépendants avant leur assemblage sur le roulement 1 :

- un manchon 15 dit manchon porte codeur supportant en rotation le moyen générateur d'impulsion magnétique 6 ;
- des moyens de positionnement du substrat 8 réalisés sous la forme d'une pièce annulaire 16 ;
- un second manchon 17 destiné à permettre l'association de la pièce annulaire 16 au roulement 1.

Les deux manchons 15, 17 et la pièce annulaire 16 sont de préférence réalisés en matériau métallique.

Le manchon porte codeur 15, d'axe X, est d'alésage identique à celui de la bague mobile 2 du roulement 1. Le manchon porte codeur 15 est monté, par exemple à force, sur la face avant de la bague mobile 2, de sorte à être solidaire d'elle en rotation.

Un codeur 6, de forme annulaire, est fixé sur la face extérieure du manchon porte codeur 15 par collage ou équivalent. Le codeur 6 possède, par exemple, une pluralité de domaines contigus, chaque domaine ayant une polarité inversée par rapport aux deux domaines qui lui sont contigus.

Le deuxième manchon 17, également d'axe X, est monté, par exemple à force, sur la face avant de la bague extérieure 3. de sorte à être solidaire d'elle.

L'alésage du manchon 17 est prévu pour ne pas interférer avec la rotation du codeur 6.

Dans les modes de réalisation représentés, le manchon 17 comporte une extension axiale dont la face extérieure prolonge la face extérieure de la bague extérieure 3.

L'extension axiale a une longueur suffisante pour se prolonger au-delà d'un plan radial contenant le codeur 6. Une telle configuration permet à l'extension axiale de remplir une fonction de protection du codeur 6 vis-à-vis des éventuelles agressions extérieures.

La fonction principale du manchon 17 est de permettre la fixation à la bague fixe 3 du roulement 1 de la pièce annulaire 16 portant le substrat 8 du dispositif de détection 7.

La pièce annulaire 16 présente un diamètre extérieur équivalent à celui de la bague extérieure 3 et un diamètre intérieur équivalent au diamètre extérieur de la bague intérieure 2.

La pièce annulaire 16 présente donc une face latérale arrière et une face latérale avant qui s'étendent entre son diamètre intérieur et son diamètre extérieur et deux faces, respectivement intérieure et extérieure qui s'étendent axialement entre les deux faces latérales.

Une rainure prismatique 18, d'axe perpendiculaire à X, est réalisée dans la face latérale arrière de la pièce annulaire 16. La rainure prismatique 18 est prévue pour recevoir le substrat 8, par exemple, le substrat 8 est collé dans la rainure prismatique 18.

La profondeur de la rainure prismatique 18 mesurée suivant l'axe X est telle que les éléments sensibles 40 se trouvent dans un plan radial situé en avant du plan contenant la face latérale arrière de la pièce annulaire 16. En d'autres termes, la profondeur de la rainure prismatique 18 est plus importante que l'épaisseur de la sonde 9 intégrant les éléments sensibles 40.

Le substrat 8 est fixé dans la rainure prismatique 18 de sorte que les éléments sensibles 40 intégrés dans la sonde 9 soient disposés suivant une perpendiculaire à un rayon passant par l'axe X, à distance d'entrefer du moyen annulaire 6 et en regard de celui-ci.

La réalisation de l'assemblage de la pièce annulaire 16 sur le manchon 17 permet donc d'associer la pièce annulaire 16 par sa face latérale arrière à la bague fixe 3 du roulement 1 en positionnant les éléments sensibles 40 à distance d'entrefer du moyen annulaire 6 et en regard de celui-ci.

A cet effet, le manchon 17 est réalisé en forme de bride de fixation sur laquelle la position de la pièce annulaire 16 est ajustée. Un segment 25 réalisé sur la face avant de la bride de fixation est alors prévu pour venir s'engager dans une portée concentrique formée sur la face latérale arrière de la pièce annulaire 16, de sorte à fixer la pièce annulaire 16 sur le manchon 17.

Le montage du roulement à capteur d'informations 1 est alors réalisé en associant d'abord le manchon porte codeur 15 à la bague mobile 2, puis le deuxième manchon 17 à la bague fixe 3. La pièce annulaire 16 portant le substrat 8 étant ensuite associée au deuxième manchon 17.

Le diamètre intérieur de la pièce annulaire 16 est prévu pour que la pièce annulaire 16 ne soit pas en contact avec le manchon porte codeur 15.

D'autre part, pour des raisons de commodité, la longueur suivant l'axe X du manchon porte codeur 15 est sensiblement équivalente à celle de l'ensemble formé par le deuxième manchon 17 et la pièce annulaire 16.

Le montage du substrat 8 dans la rainure prismatique 18 est prévu pour que, dans une série normalisée de roulements, la barrette 10 d'éléments sensibles 40 soit située, au pas de réglage fin près, à la même distance du diamètre extérieur du roulement. Dans cette configuration, l'écart entre le diamètre extérieur du roulement et le diamètre extérieur du codeur 6 est maintenu constant ainsi que l'épaisseur du deuxième manchon 17 quelque soit la dimension du roulement considéré, de sorte à ce que la barrette 10 d'éléments sensibles 40 soit toujours à distance d'entrefer et en regard du codeur 6.

Dans un mode de réalisation d'un roulement à capteur d'informations, il peut s'avérer nécessaire de ménager une étanchéité entre la bague fixe 3 et la bague mobile 2 du roulement 1.

Sur la face latérale arrière du roulement 1, l'étanchéité est assurée par un premier joint d'étanchéité à lèvre 19 qui est propre à la dimension du roulement 1.

Sur la face latérale avant du roulement 1, une étanchéité doit être réalisée entre la face latérale avant de la pièce annulaire 16 et le manchon porte codeur 15. Cette étanchéité est réalisée par un joint dynamique 20 dont le talon caoutchouté est encastré dans une gorge 20a ménagée sur la face latérale avant de la pièce annulaire 16 et dont la lèvre frottante 20b vient porter élastiquement sur l'extrémité de la face extérieure du manchon porte codeur 15.

Pour des raisons de compacité du roulement 1, le joint dynamique 20 est de taille inférieure à celui propre au roulement 1.

Le joint d'étanchéité 19 peut être choisi, pour un même diamètre d'alésage du roulement 1, dans une série de roulements normalisés à diamètres extérieurs plus faibles.

Par exemple, un roulement 1 6300 de la série de diamètre 3 de la norme ISO 15.1998 « Roulements - Roulements radiaux - Dimension d'encombrement, plan général » d'alésage 10 mm et de diamètre extérieur 35 mm équipé d'un dispositif capteur d'informations 5 selon l'invention sera muni d'un joint d'étanchéité 20 identique à celui prévu pour un roulement 6200 d'alésage 10 mm et de diamètre extérieur 30 mm de la série de diamètre 2 de la même norme.

Nous allons maintenant décrire, en relation avec les figures, les différentes spécificités des modes de réalisation du roulement capteur d'informations 1 représentés.

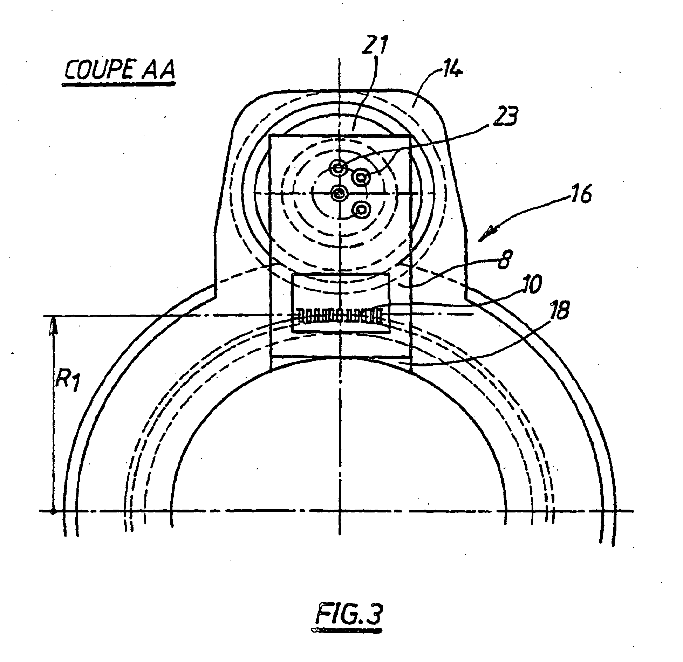

Dans le premier mode de réalisation représenté sur les figures 2 et 3, une extension radiale 16a s'étendant suivant l'axe de la rainure prismatique 18 est prévue sur la face extérieure de la pièce annulaire 16.

Dans ce mode de réalisation, le substrat 8 se présente de préférence sous la forme d'un matériau isolant rigide. La connectique d'entrée/sortie 11 est située à proximité de l'extrémité du substrat 8 opposé aux éléments sensibles 40.

L'extension radiale 16a se prolonge en regard de la connectique d'entrée/sortie 11 et vers l'avant dans la direction axiale pour former un logement 21 apte à recevoir d'une part la partie du substrat 8 intégrant la connectique d'entrée/sortie 11 et d'autre part la connectique d'entrée/sortie 11 elle-méme.

La connectique d'entrée/sortie 11 du dispositif de détection 7 comprend un connecteur embrochable 22 situé dans une extension locale du logement 21, le connecteur 22 étant branché électriquement par l'intermédiaire de broches 23 au substrat 8.

Le logement 21 est alors formé au moyen d'un alésage axial réalisé dans l'extension radiale 16a. L'alésage comporte deux diamètres successifs, l'un apte à recevoir le substrat 8 et l'autre apte à recevoir le connecteur 22 (voir figure 2).

Un opercule 24 est monté à étanchéité dans l'alésage à proximité du substrat 8 et sur la face extérieure du manchon 17 de sorte à protéger le dispositif de détection 7 des éventuelles agressions. Par exemple, l'opercule 24 est monté à étanchéité dans une portée concentrique du logement 21.

Dans le deuxième mode de réalisation représenté sur la figure 4, un logement 21 est également prévu dans une extension radiale 16a de la pièce annulaire 16.

De même que dans le mode de réalisation précédent, le substrat 8 se présente de préférence sous la forme d'un matériau isolant rigide, la connectique d'entrée/sortie 11 est située à proximité de l'extrémité du substrat 8 opposé aux éléments sensibles 40 et le logement 21 s'étend en regard de la connectique d'entrée/sortie 11.

Le logement 21 est apte à recevoir d'une part la partie du substrat 8 intégrant la connectique d'entrée/sortie 11 et d'autre part la connectique d'entrée/sortie 11 elle-même.

La connectique d'entrée/sortie 11 du dispositif de détection 7 comprend des conducteurs souples 30 branchés sur le substrat 8. Les conducteurs souples 30 appartiennent à un câble multifilaire souple 31 comportant un blindage 32.

Le logement 21 est prévu pour recevoir dans sa partie avant le câble souple 31 en le maintenant en place à l'aide d'un dispositif de presse étoupe 33 qui assure également l'étanchéité du passage du câble 31.

Le blindage 32 du câble souple 31 est relié électriquement à la masse métallique de la pièce annulaire 16 au moyen d'un passe câble métallique 34 assujetti par un écrou 35 prévu à l'intérieur du logement 21.

Dans la partie arrière du logement 21 qui contient le substrat 8, les conducteurs souples 30 sont branchés sur le substrat 8 de sorte à rendre accessible les signaux de sortie du dispositif de détection 7.

Le logement 21 peut éventuellement être rempli d'une résine isolante polymérisée.

Dans ces deux modes de réalisation, la distance entre la barrette 10 d'éléments sensibles 40 et l'axe du logement 21 peut être maintenue constante pour les différents roulements d'une série normalisée.

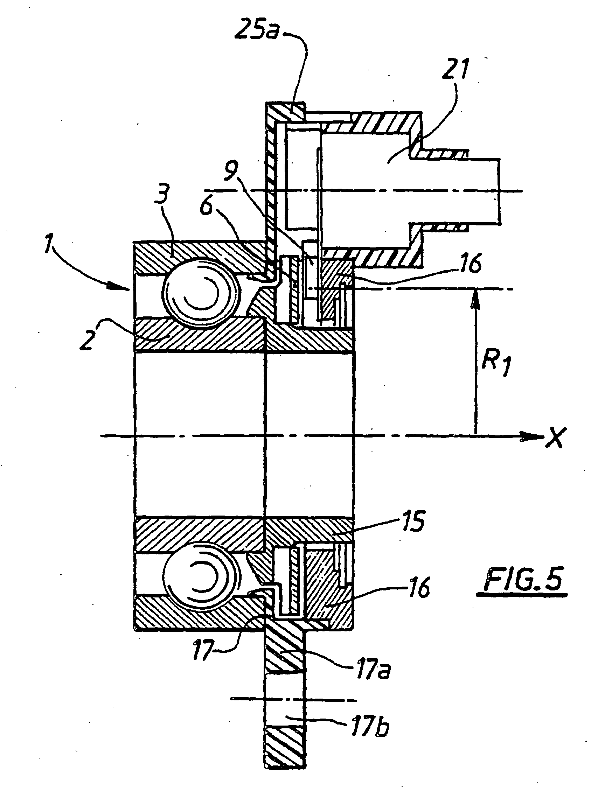

Nous allons maintenant décrire en relation avec les figures 5 à 8 trois variantes de ces deux modes de réalisation. Sur ces figures, la connectique d'entrée/sortie 11 n'est pas représentée car elle peut indifféremment comprendre un connecteur embrochable 22 ou un câble multifilaire 31.

Dans une première variante, le manchon 17 solidaire de la bague fixe 3 du roulement 1 est réalisé avec une extension radiale 17a sous forme de bride pour permettre la fixation du roulement à un bâti ou à un carter non représenté (voir figure 5).

Des trous 17b permettent le passage de moyens de serrage de la bride 17a contre ledit bâti ou carter.

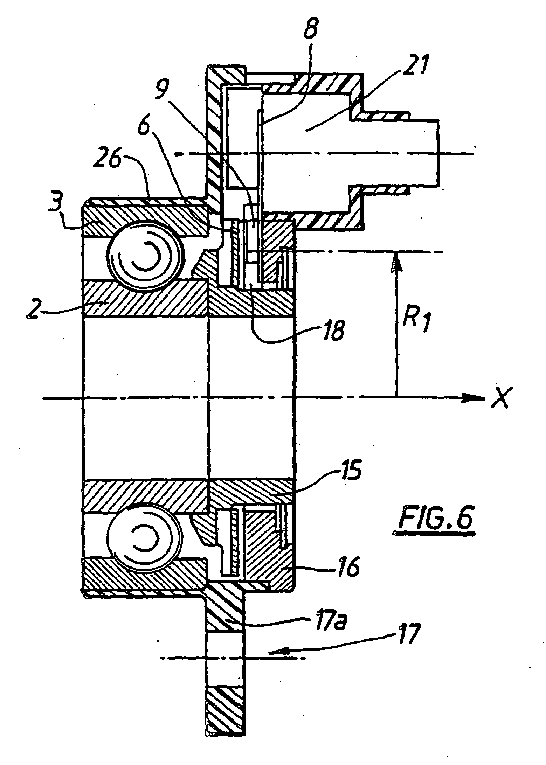

Dans une deuxième variante représentée sur la figure 6, la bride de fixation 17a est prolongée axialement sur le diamètre extérieur de la bague extérieure 3 du roulement 1 par un fourreau 26 ajusté au diamètre extérieur de ladite bague 3.

Par exemple, le diamètre extérieur du fourreau 26 est choisi dans une série de diamètre de la norme ISO 15-1998 précitée.

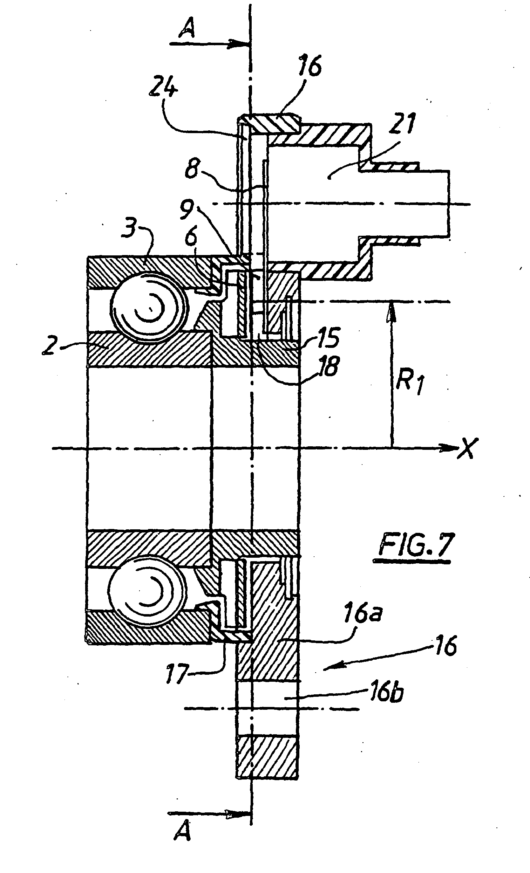

Dans une troisième variante, la pièce annulaire 16 portant le substrat 8 est réalisée avec une extension radiale 16a sous forme de bride pour permettre la fixation du roulement 1 à un bâti ou à un carter non représenté (voir figure 7).

Des trous 16b permettent le passage de moyens de serrage de la bride 16a contre ledit bâti ou carter.

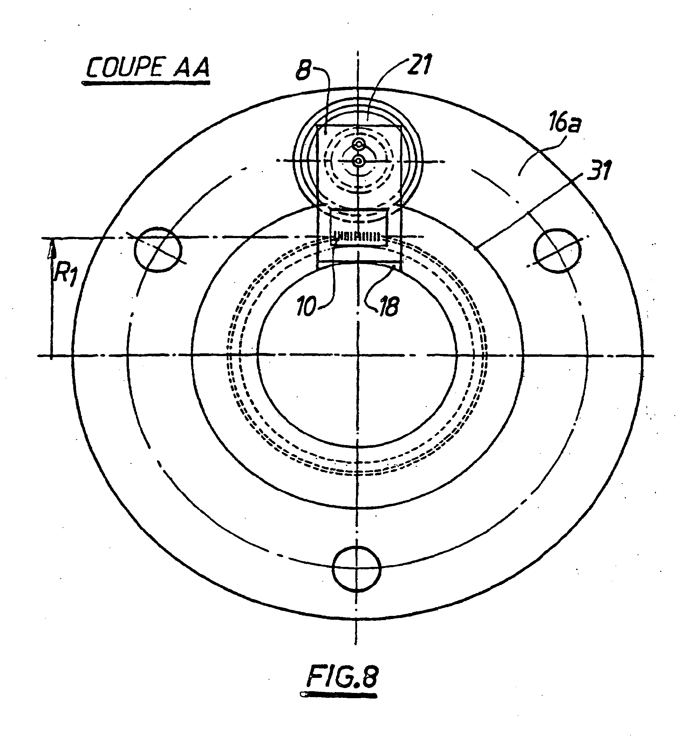

Dans cette variante, la pièce annulaire 16 est centrée sur le manchon 17 par l'intermédiaire d'un épaulement 31 concentrique à l'axe de rotation ménagé sur le manchon 17 (voir figure 8).

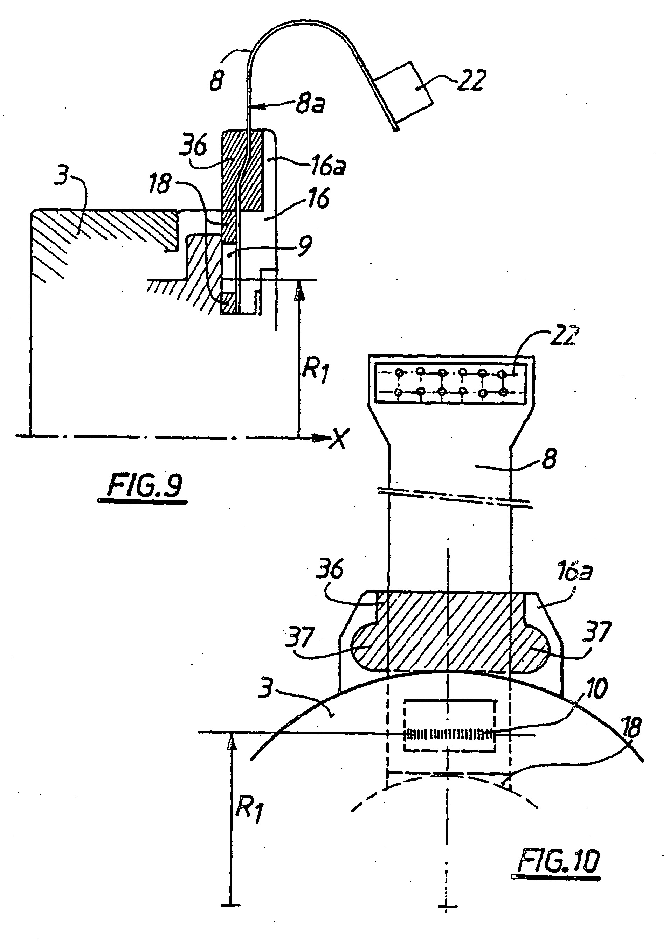

Dans le troisième mode de réalisation d'un roulement capteur d'informations 1 représenté sur les figures 9 à 12, le substrat 8 se présente sous la forme d'un film isolant souple.

Une extension radiale 16a s'étendant suivant l'axe de la rainure prismatique 18 est prévue sur la face externe de la pièce annulaire 16.

La rainure prismatique 18 se prolonge dans l'extension radiale de sorte à fixer le substrat 8 sur une surface sensiblement plus importante que dans le cas où la rainure prismatique 18 n'est formée que sur la surface latérale arrière de la pièce annulaire 16.

La partie externe de l'extension radiale 16a se termine par une cavité 36 destinée à recevoir le substrat 8. La cavité 36 est avantageusement remplie d'une résine isolante qui est polymérisée autour du substrat 8 afin de le maintenir en place.

Dans le mode de réalisation représenté sur les figures 9 et 10, deux embrèvements 37 sont pratiqués sur les surfaces internes de la cavité 36 de sorte à renforcer la résistance mécanique du dispositif.

Le substrat 8 est équipé sur la face 8a opposée à la face recevant les éléments sensibles 9 d'un film métallique de blindage relié à la masse métallique de la pièce annulaire 16.

La connectique d'entrée/sortie 11 du dispositif de détection comprend un connecteur embrochable 22 branché directement sur la partie du substrat 8 opposé aux éléments sensibles 9.

La longueur du substrat 8 mesurée entre les éléments sensibles 9 et le connecteur 22 est de taille sensiblement plus importante que dans les deux modes de réalisation précédents. Cette caractéristique associée à la flexibilité du substrat 8 permet, par exemple, un branchement direct du connecteur 22 sur le dispositif de traitement des signaux.

En variante, de ce troisième mode de réalisation représentée sur les 11 et 12, la pièce annulaire 16 portant le substrat 8 est réalisée avec une extension radiale sous forme de bride 16a pour permettre la fixation du roulement 1 à un bâti ou à un carter non représenté.

Des trous 16b permettent le passage de moyens de serrage de la bride 16a contre ledit bâti ou carter.

Sur l'extérieur de la pièce annulaire 16, la rainure 18 est prolongée par un évidemment 36 qui permet la mise en place d'un support métallique 39 de faible épaisseur et déformable.

Ce support métallique 39 peut être conformé à volonté par l'utilisateur du roulement capteur d'informations 1.

Des épaulements 36a sont prévus sur l'évidemment 36 pour permettre la pose d'un opercule de fermeture et faciliter ainsi le remplissage de l'évidemment 36 avec une résine polymérisable.

## Revendications

1. Série de roulements (1) dans laquelle chacun des roulements est équipé d'un dispositif capteur d'informations (5), comprenant une bague mobile (2) et une bague fixe (3), dans lequel un moyen annulaire générateur d'impulsions magnétiques (6) est associé à la bague mobile (2) et un dispositif de détection de ces impulsions (7) est associé à la bague fixe (3), le dispositif de détection (7) comprenant des éléments sensibles (40) qui sont associés à un substrat (8), chaque roulement de la série de roulement comprenant des moyens de positionnement du substrat (8) aptes à disposer les éléments sensibles (40) à distance d'entrefer du moyen annulaire générateur d'impulsions magnétiques (6), **caractérisée en ce que** les roulements de la série de roulements ont des dimensions différentes, le dispositif de détection étant identique dans les roulements de la série de roulements et comprenant plus de deux éléments sensibles (40) qui sont alignés et placés à équidistance les uns des autres.

2. Série de roulements selon la revendication 1, **caractérisé en ce que** les éléments sensibles (40) sont intégrés dans une sonde (9).

3. Série de roulements selon la revendication 2, **caractérisé en ce que** la sonde (9) intègre également l'électronique de traitement des signaux détectés par les éléments sensibles (40).

4. Série de roulements selon la revendication 2 ou 3, **caractérisé en ce que** la sonde (9) forme un circuit Intégré, par exemple de type ASiC.

**5.** Série de roulements selon l'une quelconque des revendications 1 à 4, **caractérisé en ce que** le substrat (8) est réalisé sous la forme d'une carte à circuit imprimé de type PCB.

**6.** Série de roulements selon l'une quelconque des revendications 1 à 4, **caractérisé en ce que** le substrat (8) est réalisé sous la forme d'un film polymère souple.

**7.** Série de roulements selon l'une quelconque des revendications 1 à 6, **caractérisé en ce que** le dispositif de détection (7) comprend une connectique d'entrée sortie (11) qui est associée au substrat

**8.** Série de roulements selon la revendication 7, **caractérisé en ce que** le dispositif de détection (7) comprend la sonde (9), le substrat (8) et la connectique d'entrée/sortie (11).

**9.** Série de roulements selon l'une quelconque des revendications 1 à 8, **caractérisé en ce que** les moyens de positionnement du substrat (8) comprennent une pièce annulaire (16) coaxiale au roulement (1) dans laquelle une rainure prismatique radiale (18) apte à recevoir le substrat (8) est formée.

**10.** Série de roulements selon la revendication 9, **caractérisé en ce que** la pièce annulaire (16) comprend un logement (21) prévu pour recevoir la connectique d'entrée/sortle (11) du dispositif de détection (7).

**11.** Série de roulements selon la revendication 10, **caractérisé en ce que** le logement (21) prévu pour recevoir la connectique d'entrée/sortie (11) est situé dans une extension (16a) radiale de la pièce annulaire (16) par rapport à la bague fixe (3) du roulement (1).

**12.** Série de roulements selon l'une quelconque des revendications 9 à 11, **caractérisé en ce que** la pièce annulaire (16) est réalisée avec une extension radiale (16a) sous forme de bride pour permettre la fixation du roulement (1) à un bâti ou à un carter.

**13.** Série de roulements selon l'une quelconque des revendications 9 à 12, **caractérisé en ce que** la pièce annulaire (16) est associée à la bague fixe (3) par l'intermédiaire d'un deuxième manchon (17) coaxial au roulement (1) qui est monté à force sur la bague fixe (3).

**14.** Série de roulements selon la revendication 13, **caractérisé en ce que** le manchon (17) comporte une extension axiale ajustée sur le diamètre extérieur de la bague fixe (3).

**15.** Série de roulements selon la revendication 13 ou 14, **caractérisé en ce que** le manchon (17) est réalisé avec une extension radiale (17a) sous forme de bride pour permettre la fixation du roulement (1) à un bâti ou à un carter.

**16.** Série de roulements selon l'une quelconque des revendications 13 à 15, **caractérisé en ce qu'un** opercule (24) est monté à étanchéité dans une portée concentrique du logement (21) et sur la face extérieure du manchon (17) pour protéger le substrat (8) des éventuelles agressions.

**17.** Série de roulements selon l'une quelconque des revendications 1 à 16, **caractérisé en ce que** la connectique d'entrée/sortie (11) du dispositif de détection (7) comprend un connecteur (22), par exemple embrochable.

**18.** Série de roulements selon l'une quelconque des revendications 1 à 16, **caractérisé en ce que** la connectique d'entrée/sortie (11) du dispositif de détection (7) comprend un câble multifilaire (30).

**19.** Série de roulements selon l'une quelconque des revendications 1 à 18, **caractérisé en ce que** le moyen générateur d'impulsions (6) est une pièce annulaire en matériau synthétique chargé de particules de ferrite formée d'une pluralité de domaines contigus à direction d'aimantation Inversée d'un domaine donné par rapport aux deux domaines qui lui sont contigus.

**20.** Série de roulements selon l'une quelconque des revendications 1 à 19, **caractérisé en ce** le moyen générateur d'impulsions (6) est porté à liaison fixe par un manchon (15) coaxial au roulement (1) qui est monté à force sur la bague mobile (2).

**21.** Série de roulements selon la revendication 20, **caractérisé en ce qu'**il comprend un dispositif d'étanchéité réalisé au moyen d'un joint dynamique (20) dont le talon est associé à la face externe de la pièce annulaire (16) et dont la lèvre frottante vient porter élastiquement sur une extrémité externe du manchon tournant (16).

**22.** Série de roulements selon la revendication 21, **caractérisé en ce que** le joint d'étanchéité (19) est de diamètre inférieur à celui du roulement (1).

**23.** Série de roulements selon la revendication 22, **caractérisé en ce que** le joint d'étanchéité (19) est choisi, pour un même diamètre d'alésage du roulement (1), dans une série de roulements normalisés à diamètres extérieurs plus faibles.

**24.** Série de roulements selon l'une quelconque des revendications 1 à 23, **caractérisé en ce que** les élément sensibles (40) alignés sont choisis parmi le groupe comprenant les sondes à effet Hall, les magnétorésistances, les magnétorésistances géantes.

25. Série de roulements selon l'une quelconque des revendications 1 à 24, **caractérisé en ce que** le dispositif de détection (7) comprend un nombre pair 2N d'éléments sensibles (40) divisé en au moins deux sous-ensembles.

26. Série de roulements selon la revendication 25, **caractérisé en ce que** le dispositif de détection (7) comprend un nombre multiple de quatre 4P élément sensibles (40) divisé en quatre sous-ensembles.

27. Série de roulements selon l'une quelconque des revendications 1 à 28, **caractérisé en ce que** la sonde (9) intègre des moyens additionneurs et des moyens inverseurs de sorte à former, à partir des signaux détectés par chacun des éléments sensibles (40), au moins deux signaux analogiques de sortie du dispositif de détection (7) en quadrature de phase.

28. Série de roulements selon l'une quelconque des revendications 1 à 27, **caractérisé en ce que** la sonde (9) intègre un dispositif interpolateur (41) des signaux analogiques détectés par les éléments sensibles (40).

**Claims**

1. A set of bearings (1) wherein each bearing (1) is equipped with an information sensor device (5), comprising a movable raceway (2) and a fixed raceway (3), in which an annular means generating magnetic pulses (6) is associated with the movable raceway (2) and a device for detecting these pulses (7) is associated with the fixed raceway (3), the detection device (7) comprising sensitive elements (40) which are associated with a substrate (8), each bearing of the set of bearings (1) comprising means of positioning the substrate (8) able to dispose the sensitive elements (40) at an airgap distance from the annular means generating magnetic pulses (6), **characterised in that** the bearings (1) of the set of bearings (1) have different dimensions, the detection device (7) being identical in the bearings (1) of the set of bearings (1) and comprising more than two sensitive elements (40) which are aligned and placed at equal distances from each other.

2. A set of bearings to Claim 1, **characterised in that** the sensitive elements (40) are integrated into a sensor (9).

3. A set of bearings according to Claim 2, **characterised in that** the sensor (9) also includes the electronics for processing the signals detected by the sensitive elements (40).

4. A set of bearings according to Claim 2 or 3, **characterised in that** the sensor (9) forms an integrated circuit, for example of the ASIC type.

5. A set of bearings according to any one of Claims 1 to 4, **characterised in that** the substrate (8) is produced in the form of a printed circuit board of the PCB type.

6. A set of bearings according to any one of Claims 1 to 4, **characterised in that** the substrate (8) is produced in the form of a flexible polymer film.

7. A set of bearings according to any one of Claims 1 to 6, **characterised in that** the detection device (7) comprises input/output connections (ii) which are associated with the substrate (8).

8. A set of bearings according to Claim 7, **characterised in that** the detection device (7) comprises the sensor (9), the substrate (8) and the input/output connections (11).

9. A set of bearings according to any one of Claims 1 to 8, **characterised in that** the means of positioning the substrate (8) comprise an annular part (16) coaxial with the bearing (1) in which a radial prismatic groove (18) able to receive the substrate (8) is formed.

10. A set of bearings according to Claim 9, **characterised in that** the annular part (16) comprises a housing (21) designed to receive the input/output connections (11) of the detection device (7).

11. A set of bearings according to Claim 10, **characterised in that** the housing (21) designed to receive the input/output connections (11) are situated in a radial extension (16a) of the annular part (16) with respect to the fixed raceway (3) of the bearing (1).

12. A set of bearings according to any one of Claims 9 to 11, **characterised in that** the annular part (16) is produced with a radial extension (16a) in the form of a flange to allow the fixing of a bearing (1) to a frame or casing.

13. A set of bearings according to any one of Claims 9 to 12, **characterised in that** the annular part (16) is associated with the fixed raceway (3) by means of a second sleeve (17) coaxial with the bearing (1) which is mounted by force fitting on the fixed raceway (3).

14. A set of bearings according to Claim 13, **characterised in that** the sleeve (17) has an axial extension adjusted to the outside diameter of the fixed raceway (3).

15. A set of bearings according to Claim 13 or 14, **characterised in that** the sleeve (17) is produced with a radial extension (17a) in the form of a flange to allow the fixing of the bearing (1) to a frame or casing.

16. A set of bearings according to any one of Claims 13 to 15, **characterised in that** a cap (24) is sealingly mounted in a concentric span of the housing (21) and on the external face of the sleeve (17) in order to protect the substrate (8) from any attacks.

17. A set of bearings according to any one of Claims 1 to 16, **characterised in that** the input/output connections (11) of the detection device (7) comprise a connector (22), for example of the plug-in type.

18. A set of bearings according to any one of Claims 1 to 16, **characterised in that** the input/output connections (11) of the connection device (7) comprise a multi-wire cable (30).

19. A set of bearings according to any one of Claims 1 to 18, **characterised in that** the pulse generating means (6) is an annular part made of synthetic material loaded with ferrite particles formed by a plurality of contiguous fields with a direction of magnetisation which is reversed from a given field with respect to the two fields contiguous with it.

20. A set of bearings according to any one of Claims 1 to 19, **characterised in that** the pulse generating means (6) is carried with a fixed connection by a sleeve (15) coaxial with the bearing (1), which is force-fitted on the movable raceway (2).

21. A set of bearings according to Claim 20, **characterised in that** it comprises a sealing device produced by means of a dynamic joint (20) whose heel is associated with the external face of the annular part (16) and whose rubbing lip bears elastically on an external end of the rotating sleeve.

22. A set of bearings according to Claim 21, **characterised in that** the sealing joint (19) has a diameter less than that of the bearing (1).

23. A set of bearings according to Claim 22, **characterised in that** the sealing joint (19) is chosen, for the same bore diameter of the bearing (1), from a series of standardised bearings with smaller outside diameters.

24. A set of bearings according to any one of Claims 1 to 23, **characterised in that** the aligned sensitive elements (40) are chosen from amongst the group comprising Hall effect sensors, magnetoresistors and giant magnetoresistors.

25. A set of bearings according to any one of Claims 1 to 24, **characterised in that** the detection device (7) comprises an even number 2N of sensitive elements (40) divided into at least two subsets.

26. A set of bearings according to Claim 25, **characterised in that** the detection device (7) comprises a number which is a multiple of four 4P sensitive elements (40) divided into four subsets.

27. A set of bearings according to any one of Claims 1 to 26, **characterised in that** the sensor (9) includes adding means and inverting means so as to form, from signals detected by each of the sensitive elements (40), at least two analogue output signals from the detection device (7) in phase quadrature.

28. A set of bearings according to any one of Claims 1 to 31, **characterised in that** the sensor (9) includes a device (41) for interpolating the analogue signals detected by the sensitive elements (40).

## Patentansprüche

1. Lagerserie, bei der jeder Lager (1) mit einer Informationserfassungsvorrichtung (5) ausgestattet ist und einem mobilen Ring (2) und einem festen Ring (3) umfasst, wobei ein ringförmiges, magnetische Impulse erzeugendes Mittel (6) dem mobilen Ring (2) und eine Erfassungsvorrichtung dieser Impulse (7) dem festen Ring (3) zugeordnet ist, wobei die Erfassungsvorrichtung (7) empfindliche Elemente (40) umfasst, die einem Substrat (8) zugeordnet sind, wobei jeder Lager der Lagerserie Positioniermittel des Substrats (8) umfasst, die die empfindlichen Elemente (40) im Luftspaltabstand zum ringförmigen, magnetische Impulse erzeugenden Mittel (6) anordnen können, **dadurch gekennzeichnet , dass** die Lager der Lagerserie unterschiedliche Abmessungen aufweisen, wobei die Erfassungsvorrichtung in den Lagern der Lagerserie identisch ist und mehr als zwei empfindliche Elemente (40) aufweist, die fluchtend und in gleichem Abstand zueinander angeordnet sind.

2. Lagerserie nach Anspruch 1, **dadurch gekennzeichnet, dass** die empfindlichen Elemente (40) in eine Sonde (9) integriert sind.

3. Lagerserie nach Anspruch 2, **dadurch gekennzeichnet, dass** die Sonde (9) ebenfalls die Verarbeitungselektronik der von den empfindlichen Elementen (40) erfassten Signale beinhaltet.

**4.** Lagerserie nach Anspruch 2 oder 3, **dadurch gekennzeichnet, dass** die Sonde (9) eine integrierte Schaltung beispielsweise des Typs ASIC bildet.

**5.** Lagerserie nach einem der Ansprüche 1 bis 4, **dadurch gekennzeichnet, dass** das Substrat (8) in Form einer IC-Karte des Typs PCB vorliegt.

**6.** Lagerserie nach einem der Ansprüche 1 bis 4, **dadurch gekennzeichnet, dass** das Substrat (8) in Form einer flexiblen Polymerfolie vorliegt.

**7.** Lagerserie nach einem der Ansprüche 1 bis 6, **dadurch gekennzeichnet, dass** die Erfassungsvorrichtung (7) eine Eingangs-/Ausgangsverdrahtung (11) umfasst, die dem Substrat (8) beigeordnet ist.

**8.** Lagerserie nach Anspruch 7, **dadurch gekennzeichnet, dass** die Erfassungsvorrichtung (7) die Sonde (9), das Substrat (8) und die Eingangs-/Ausgangsverdrahtung (11) umfasst.

**9.** Lagerserie nach einem der Ansprüche 1 bis 8, **dadurch gekennzeichnet, dass** die Positioniermittel des Substrats (8) ein ringförmiges, in Bezug auf das Lager (1) koaxiales Teil (16) umfassen, in dem eine radiale prismatische Rille (18) ausgebildet ist, die das Substrat (8) aufnehmen kann.

**10.** Lagerserie nach Anspruch 9, **dadurch gekennzeichnet, dass** das ringförmige Teil (16) eine Aufnahme (21) umfasst, die vorgesehen ist, um die Eingangs-/Ausgangsverdrahtung (11) der Erfassungsvorrichtung (7) aufzunehmen.

**11.** Lagerserie nach Anspruch 10, **dadurch gekennzeichnet, dass** sich die Aufnahme (21) für die Eingangs-/Ausgangsverdrahtung (11) in einer in Bezug auf den festen Ring (3) des Lagers (1) radialen Erweiterung (16a) des ringförmigen Teils (16) befindet.

**12.** Lagerserie nach einem der Ansprüche 9 bis 11, **dadurch gekennzeichnet, dass** das ringförmige Teil (16) eine radiale Erweiterung (16a) in Form eines Flansches aufweist, um die Befestigung des Lagers (1) an einem Gestell oder Gehäuse zu ermöglichen.

**13.** Lagerserie nach einem der Ansprüche 9 bis 12, **dadurch gekennzeichnet, dass** das ringförmige Teil (16) über eine zweite in Bezug auf das Lager (1) koaxiale Muffe (17) mit dem festen Ring (3) verbunden ist, die unter Kraftanwendung auf den festen Ring (3) montiert ist.

**14.** Lagerserie nach Anspruch 13, **dadurch gekennzeichnet, dass** die Muffe (17) eine axiale Erweiterung umfasst, die dem Außendurchmesser des festen Rings (3) angepasst ist.

**15.** Lagerserie nach Anspruch 13 oder 14, **dadurch gekennzeichnet, dass** die Muffe (17) mit einer radialen Erweiterung in Form eines Flansches realisiert ist, um die Befestigung des Lagers (1) an einem Gestell oder Gehäuse zu ermöglichen.

**16.** Lagerserie nach einem der Ansprüche 13 bis 15, **dadurch gekennzeichnet, dass** eine Folie (24) dicht in einer konzentrischen Auflagefläche der Aufnahme (21) und an der Außenseite der Muffe (17) montiert ist, um das Substrat (8) vor eventuellen Aggressionen zu schützen.

**17.** Lagerserie nach einem der Ansprüche 1 bis 16, **dadurch gekennzeichnet, dass** die Eingangs-/Ausgangsverdrahtung (11) der Erfassungsvorrichtung (7) einen Steckverbinder, beispielsweise einen Stecker (22) umfasst.

**18.** Lagerserie nach einem der Ansprüche 1 bis 16, **dadurch gekennzeichnet, dass** die Eingangs-/Ausgangsverdrahtung (11) der Erfassungsvorrichtung (7) ein Mehrdrahtkabel (30) umfasst.

**19.** Lagerserie nach einem der Ansprüche 1 bis 18, **dadurch gekennzeichnet, dass** das Impulse erzeugende Mittel (6) ein ringförmiges Teil aus mit Ferritpartikeln verstärktem Synthetikmaterial ist, das von einer Mehrzahl von angrenzenden Bereichen mit umgekehrter Magnetisierung eines gegebenen Bereichs in Bezug auf die beiden an diesen angrenzenden Bereiche gebildet wird.

**20.** Lagerserie nach einem der Ansprüche 1 bis 19, **dadurch gekennzeichnet, dass** das Impulse erzeugende Mittel (6) in fester Verbindung von einer in Bezug auf das Lager (1) koaxialen Muffe (15) getragen wird, die unter Kraftanwendung auf den mobilen Ring (2) montiert ist.

**21.** Lagerserie nach Anspruch 20, **dadurch gekennzeichnet, dass** es eine Dichtungsvorrichtung umfasst, die mittels einer dynamischen Dichtung (20) realisiert ist, deren Ansatz der Außenseite des ringförmigen Teils (16) beigeordnet ist, und deren reibende Lippe sich elastisch an einem äußeren Ende der besagten Drehmuffe (15) abstützt.

**22.** Lagerserie nach Anspruch 21, **dadurch gekennzeichnet, dass** der Durchmesser der Dichtung (19) kleiner ist als derjenige des Lagers (1).

**23.** Lagerserie nach Anspruch 22, **dadurch gekennzeichnet, dass** die Dichtung (19), bei einem gleichen Bohrungsdurchmesser des Lagers (1), aus einer Reihe von genormten Lagern mit kleineren Außendurchmessern gewählt wird.

**24.** Lagerserie nach einem der Ansprüche 1 bis 23, **dadurch gekennzeichnet, dass** die fluchtenden empfindlichen Elemente (40) in der Gruppe der Hallsonden, der Magnetoresistenzen, der Riesen-Magnetoresistenzen gewählt werden.

**25.** Lagerserie nach einem der Ansprüche 1 bis 24, **dadurch gekennzeichnet, dass** die Erfassungsvorrichtung (7) eine gerade Anzahl 2N von empfindlichen Elementen (40) umfasst, die in mindestens zwei Untereinheiten unterteilt ist.

**26.** Lagerserie nach Anspruch 25, **dadurch gekennzeichnet, dass** die Erfassungsvorrichtung (7) eine Anzahl, die ein Vielfaches von vier 4P empfindlichen Elementen (40) und in vier Untereinheiten unterteilt ist.

**27.** Lagerserie nach einem der Ansprüche 1 bis 26, **dadurch gekennzeichnet, dass** die Sonde (9) Addiermittel und Umschaltmittel integriert, um ab von jedem der empfindlichen Elemente (40) erfassten Signalen mindestens zwei analogische Ausgangssignale der Erfassungsvorrichtung (7) in Phasenquadratur zu bilden.

**28.** Lagerserie nach einem der Ansprüche 1 bis 27, **dadurch gekennzeichnet, dass** die Sonde (9) eine Interpolationsvorrichtung (41) der von den empfindlichen Elementen (40) erfassten analogischen Signale integriert.

$$SIN = (S1 - S2) - (S1' - S2')$$
$$COS = (S1 + S2) = (S1' + S2')$$

*FIG.1*

15

*FIG.2*

COUPE AA

FIG.3

FIG.4

*FIG.5*

*FIG.6*

A

24        16

21

8

9

6

3

2                    15

18

R₁

X

FIG.7

16a

16

16b

17

A

COUPE AA

FIG.8

22

_FIG.9_

_FIG.10_

**FIG.11**

**FIG.12**

COUPE AA

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2667947
- FR 2669432
- FR 2669728
- FR 2671633
- FR 2678691
- FR 2678692
- FR 2690989
- FR 2693272
- FR 2694082
- FR 2702567
- FR 2710985
- FR 2718499
- EP 375019 A
- EP 420040 A
- EP 420041 A
- EP 438624 A
- EP 487405 A
- EP 488853 A
- EP 498298 A
- EP 518157 A
- EP 521789 A
- EP 522933 A
- EP 531924 A
- EP 557931 A
- EP 557932 A
- EP 647851 A
- EP 693689 A
- EP 701132 A
- EP 701133 A
- EP 714029 A
- EP 745857 A
- EP 751311 A
- EP 753679 A
- EP 767385 A
- FR 2639689
- FR 2640706
- FR 2645924
- FR 2730283
- FR 2732458
- FR 2717266
- FR 2701298
- EP 371836 A
- EP 376771 A
- EP 484195 A
- EP 394083 A
- EP 607719 A
- EP 616219 A
- EP 619438 A
- EP 631140 A
- EP 652438 A
- EP 671628 A
- EP 725281 A
- EP 735348 A
- EP 0443940 A
- EP 0652438 A
- EP 0869365 A
- FR 2599794 A
- EP 395783 A
- WO 9701660 A
- FR 9712033